(19) Europäisches Patentamt
European Patent Office
Office européen des brevets

(11) **EP 4 459 891 A1**

(12) **EUROPEAN PATENT APPLICATION**
published in accordance with Art. 153(4) EPC

(43) Date of publication:
**06.11.2024 Bulletin 2024/45**

(51) International Patent Classification (IPC):
**H04B 7/10** (2017.01) **H04B 1/40** (2015.01)

(21) Application number: **22927822.1**

(52) Cooperative Patent Classification (CPC):
**H04B 1/40; H04B 7/10**

(22) Date of filing: **28.02.2022**

(86) International application number:
**PCT/CN2022/078175**

(87) International publication number:
**WO 2023/159539 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **REN, Tianhao
  Shenzhen, Guangdong 518129 (CN)**
• **CAI, Meng
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **SIGNAL POWER POOLING DEVICE**

(57) A signal power pooling apparatus is provided, to improve flexibility of controlling a signal polarization direction. In embodiments of this application, the apparatus includes a first tunable coupler and a second tunable coupler. The first tunable coupler includes a first input port, a first straight-through port, a first coupling port, and a first isolation port. The second tunable coupler includes a second input port, a second straight-through port, a second coupling port, and a second isolation port. The first input port may be configured to receive a first horizontally polarized signal, and the first straight-through port may output a second horizontally polarized signal. The second isolation port is connected to the first coupling port, and the second coupling port is connected to the first isolation port. The second input port may receive a first vertically polarized signal, and the second straight-through port may output a second vertically polarized signal.

FIG. 4

**Description**

**TECHNICAL FIELD**

This application relates to the field of communication technologies, and in particular, to a signal power pooling apparatus.

**BACKGROUND**

In a transmission process of an electromagnetic wave, different weather conditions cause different losses to the electromagnetic wave. Rain is used as an example, and raindrops are a medium. When the electromagnetic wave passes through the raindrops at different polarization angles, losses are different. When a rain region and a frequency are the same, a path loss of the electromagnetic wave in horizontal polarization is greater than that in vertical polarization. In an actual wireless communication system, when a weather condition is poor, two streams of electromagnetic waves are usually combined into one stream of electromagnetic waves, in other words, transmission of same data is performed in two polarization directions, and the electromagnetic waves are transmitted in dual polarizations at full powers, so that an edge coverage effect is improved. In this case, only one fixed polarization can be synthesized in space, it cannot be ensured that the polarization is an optimal polarization needed by current weather, and the polarization cannot be adjusted based on different weather conditions.

A horizontally polarized input signal and a vertically polarized input signal are input to a tunable coupler, and a horizontally polarized output signal and a vertically polarized output signal are output. The tunable coupler is generally "unilaterally adjustable", in other words, when a signal enters an input port of the tunable coupler, energy allocated to a coupling port cannot exceed energy of a straight-through port. Therefore, in this manner, only unidirectional power borrowing between a horizontally polarized signal and a vertically polarized signal can be implemented, and a polarization direction cannot be flexibly controlled.

**SUMMARY**

This application provides a signal power pooling apparatus, to improve flexibility of controlling a signal polarization direction.

A first aspect of this application provides a signal power pooling apparatus, including a first tunable coupler and a second tunable coupler. The first tunable coupler includes a first input port, a first straight-through port, a first coupling port, and a first isolation port. The first input port is configured to receive a first horizontally polarized signal, and the first straight-through port is configured to output a second horizontally polarized signal. The second tunable coupler includes a second input port, a second straight-through port, a second coupling port, and a second isolation port. The second isolation port is connected to the first coupling port, and the second coupling port is connected to the first isolation port. The second input port is configured to receive a first vertically polarized signal, and the second straight-through port is configured to output a second vertically polarized signal.

In the foregoing aspect, coupling coefficients of the first tunable coupler and the second tunable coupler may be adjusted, to obtain a second horizontally polarized signal and a second vertically polarized signal with wanted powers. Because the first horizontally polarized signal and the first vertically polarized signal are respectively input to input ports of different tunable couplers, a power of the first horizontally polarized signal and a power of the first vertically polarized signal may be mutually borrowed. In addition, the second horizontally polarized signal and the second vertically polarized signal are respectively output by straight-through ports of the different tunable couplers, a phase difference does not change, and no phase shifter is needed for regulating. This avoids a dispersion problem.

In a possible implementation, a coupling coefficient of one of the first tunable coupler and the second tunable coupler is fixed.

In the foregoing possible implementation, if a coupling coefficient of the first tunable coupler is fixed, when a coupling coefficient of the second tunable coupler is adjusted, the power of the second vertically polarized signal may be regulated to the second horizontally polarized signal. If a coupling coefficient of the second tunable coupler is fixed, when a coupling coefficient of the first tunable coupler is adjusted, the power of the second horizontally polarized signal may be regulated to the second vertically polarized signal. Therefore, mutual power borrowing between two sides may be implemented. This improves flexibility of signal power adjustment.

In a possible implementation, when the coupling coefficient of the first tunable coupler is fixed to 0.5, the coupling coefficient of the second tunable coupler is adjustable within 0.137 to 0.5.

In the foregoing possible implementation, the coupling coefficient of the first tunable coupler may be fixed to 0.5, and the coupling coefficient of the second tunable coupler may be adjustable within 0.137 to 0.5, so that an output power difference changes between -2 W and 0 W. This improves flexibility of controlling a signal polarization direction.

In a possible implementation, when the coupling coefficient of the second tunable coupler is fixed to 0.5, the coupling coefficient of the first tunable coupler is adjustable within 0.137 to 0.5.

In the foregoing possible implementation, the coupling coefficient of the second tunable coupler may be fixed to 0.5, and the coupling coefficient of the first tunable coupler may be adjustable within 0.137 to 0.5, so that an output power difference changes between 0 W and 2 W. Alternatively, this solution may be combined with the foregoing solution, so that an output power difference changes between -2 W and 2 W. This improves flexibility of controlling a signal polarization direction.

In a possible implementation, when the coupling coefficient of the first tunable coupler is fixed to 0.309, the coupling coefficient of the second tunable coupler is adjustable within 0.066 to 0.309.

In the foregoing possible implementation, the coupling coefficient of the first tunable coupler may be fixed to 0.309, and the coupling coefficient of the second tunable coupler may be adjustable within 0.066 to 0.309, so that an output power difference changes between -2 W and 0 W. This improves flexibility of controlling a signal polarization direction.

In a possible implementation, when the coupling coefficient of the second tunable coupler is fixed to 0.309, the coupling coefficient of the first tunable coupler is adjustable within 0.066 to 0.309.

In the foregoing possible implementation, the coupling coefficient of the second tunable coupler may be fixed to 0.309, and the coupling coefficient of the first tunable coupler may be adjustable within 0.066 to 0.309, so that an output power difference changes between 0 W and 2 W. Alternatively, this solution may also be combined with the foregoing solution, so that an output power difference changes between -2 W and 2 W. This improves flexibility of controlling a signal polarization direction.

In a possible implementation, the first tunable coupler and the second tunable coupler are tunable couplers of a 90° electrical bridge.

In the foregoing possible implementation, the first straight-through port and the first coupling port output signals having a 90° phase difference, and the second straight-through port and the second coupling port output signals having a 90° phase difference.

In a possible implementation, the first horizontally polarized signal and the first vertically polarized signal carry same information.

In the foregoing possible implementation, the first horizontally polarized signal and the first vertically polarized signal need to carry the same information, so that a signal generated by combining the second horizontally polarized signal and the second vertically polarized signal is stable, to improve an edge coverage effect of the signal.

In a possible implementation, the first horizontally polarized signal and the first vertically polarized signal are in-phase.

In a possible implementation, in-phase transmission of the first horizontally polarized signal and the first vertically polarized signal may alternatively be performed, so that a phase difference between the second horizontally polarized signal and the second vertically polarized signal is 0. This improves an information combination effect after signal polarization.

A second aspect of this application provides an electronic device, where the electronic device includes any signal power pooling apparatus according to any one of the first aspect and the implementations of the first aspect.

## BRIEF DESCRIPTION OF DRAWINGS

FIG. 1 is an architectural diagram of a polarization manner according to an embodiment of this application;
FIG. 2 is a diagram of a signal processing manner according to an embodiment of this application;
FIG. 3 is a diagram of another signal processing manner according to an embodiment of this application;
FIG. 4 is a diagram of a structure of a signal power pooling apparatus according to an embodiment of this application;
FIG. 5 is a diagram of a change of an output power difference according to an embodiment of this application;
FIG. 6 is a diagram of a change of an output phase difference according to an embodiment of this application;
FIG. 7 is another diagram of a change of an output power difference according to an embodiment of this application;
FIG. 8 is another diagram of a change of an output phase difference according to an embodiment of this application;
FIG. 9 is another diagram of a change of an output power difference according to an embodiment of this application;
FIG. 10 is another diagram of a change of an output phase difference according to an embodiment of this application;
FIG. 11 is another diagram of a change of an output power difference according to an embodiment of this application;
FIG. 12 is another diagram of a change of an output phase difference according to an embodiment of this application; and
FIG. 13 is a diagram of a structure of an electronic device according to an embodiment of this application.

**DESCRIPTION OF EMBODIMENTS**

Embodiments of this application provide a signal power pooling apparatus, to improve flexibility of controlling a signal polarization direction.

The following describes embodiments of this application with reference to the accompanying drawings. It is clear that the described embodiments are merely a part rather than all of embodiments of this application. Persons of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and so on are intended to distinguish between similar objects but do not necessarily indicate a particular order or sequence. It should be understood that the data termed in such a way is interchangeable in a proper circumstance, so that embodiments described herein can be implemented in other orders than the order illustrated or described herein. In addition, the terms "include", "have" and any variants thereof are intended to cover a non-exclusive inclusion. For example, a process, method, system, product, or device that includes a list of steps or units is not necessarily limited to those clearly listed steps or units, but may include other steps or units that are not clearly listed or are inherent to the process, method, product, or device.

The following explains some terms in embodiments of this application.

Polarization: In an electromagnetic wave, the polarization represents a property of a direction change of an electric field vector or a magnetic field vector in space. A polarization manner is described by using a trajectory of a tip of the electric field vector. It is assumed that a propagation direction of the electromagnetic wave is used as a z axis and a movement trajectory of the electromagnetic wave is projected on an xy plane. In this case, if the projection is elliptical, the polarization manner of the electromagnetic wave is elliptical polarization. If the projection is circular, the polarization manner is circular polarization. If the projection is linear, the polarization manner is linear polarization.

Linear polarization: The linear polarization is classified into vertical (V) polarization and horizontal (H) polarization. In the vertical polarization, the electric field vector vibrates on a yz plane and is projected from the z axis to the xy plane, and the projection is a short line that coincides with a y axis. For example, if a rope shakes up and down, a generated wave is in up-and-down wave motion. In the horizontal polarization, the electric field vector vibrates on an xz plane and is projected from the z axis to the xy plane, and the projection is a short line that coincides with an x axis. For example, if a rope shakes left and right, a generated wave is in left-and-right wave motion.

Power pooling: Powers of two or more channels can be mutually borrowed to keep a total output power unchanged (except for some line losses).

Tunable coupler: The tunable coupler is a coupler with an adjustable coupling coefficient. Generally, two signals are respectively input by an input port and an isolation port, one part of energy of the two signals is output from a straight-through port, and the other part of energy is coupled by a coupling port. The coupling coefficient may be adjusted through a specific control means. Energy of the coupling port generally does not exceed 50%, in other words, the straight-through port and the coupling port are not "interchanged".

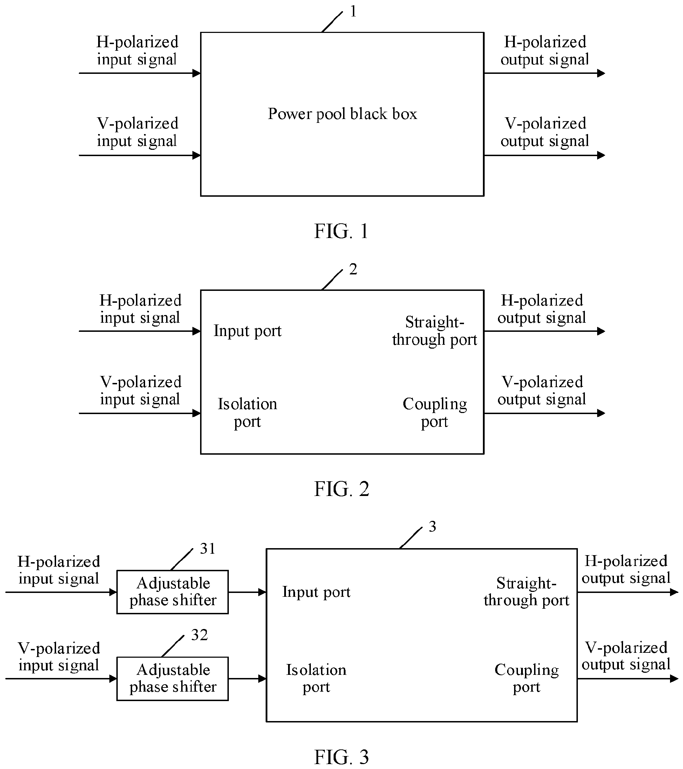

In a transmission process of the electromagnetic wave, different weather conditions cause different losses to the electromagnetic wave. Rain is used as an example, and raindrops are a medium. When the electromagnetic wave passes through the raindrops at different polarization angles, losses are different. When a rain region and a frequency are the same, a path loss in the H polarization is greater than that in the V polarization. In an actual wireless communication system, when a weather condition is poor, two streams of electromagnetic waves are usually combined into one stream of electromagnetic waves, in other words, transmission of same data is performed in two polarization directions, and the electromagnetic waves are transmitted in dual polarizations at full powers, so that an edge coverage effect is improved. In this case, only one fixed polarization can be synthesized in space, it cannot be ensured that the polarization is an optimal polarization needed by current weather, and the polarization cannot be adjusted based on different weather conditions. An optimal polarization direction varies with weather conditions (such as wind blowing and rainfall). FIG. 1 is an architectural diagram of a polarization manner according to an embodiment of this application. The architectural diagram includes a power pool black box 1. An H-polarized input signal and a V-polarized input signal are input to the power pool black box 1. An H-polarized output signal and a V-polarized output signal are output by adjusting a power of the H-polarized input signal and a power of the V-polarized input signal (for example, implementing mutual borrowing between the power of the H-polarized input signal and the power of the V-polarized input signal), where a combined polarization direction of the H-polarized output signal and the V-polarized output signal satisfies an optimal polarization direction under a weather condition.

Both the H-polarized input signal and the V-polarized input signal are transmitted at full powers that are the same. The input refers to a signal before entering the power pool black box, and the output refers to a signal after leaving the power pool black box.

$$\text{Input phase difference} = \text{V-polarized input phase} - \text{H-polarized input phase};$$

$$\text{Output power difference} = \text{V-polarized output power} - \text{H-polarized output power};$$

and

$$\text{Output phase difference} = \text{V-polarized output phase} - \text{H-polarized output phase}.$$

FIG. 2 is a diagram of a signal processing manner according to an embodiment of this application. An H-polarized input signal and a V-polarized input signal are input to a tunable coupler 2. The tunable coupler 2 includes an input port, a straight-through port, a coupling port, and an isolation port. The input port receives the H-polarized input signal, and the isolation port receives the V-polarized input signal. The straight-through port outputs an H-polarized output signal, and the coupling port outputs a V-polarized output signal.

In this implementation, because the tunable coupler is generally "unilaterally adjustable", in other words, when a signal enters the input port, energy allocated to the coupling port cannot exceed energy of the straight-through port. Therefore, in this manner, only unidirectional power borrowing between H and V can be implemented, and bidirectional power borrowing cannot be implemented. In addition, when the coupler has a 90° electrical bridge, if a phase difference between the H-polarized input signal and the V-polarized input signal is 0° or 180°, it can be learned from a simulation result that effect of mutual power borrowing between the two signals cannot be achieved regardless of a coupling coefficient. In order to implement non-in-phase or non-out-phase between H and V, a phase shifter is usually needed to process a phase of the H-polarized input signal and a phase of the V-polarized input signal. However, the phase shifter uses a narrowband, and consequently the signal input to the tunable coupler has a dispersion problem. As a result, a polarization power cannot be flexibly controlled.

FIG. 3 is a diagram of another signal processing manner according to an embodiment of this application. An H-polarized input signal and a V-polarized input signal are input to a fixed coupler 3 by using adjustable phase shifters. The fixed coupler 3 includes an input port, a straight-through port, a coupling port, and an isolation port. The input port receives the H-polarized input signal that passes through an adjustable phase shifter 31, and the isolation port receives the V-polarized input signal that passes through an adjustable phase shifter 32. The straight-through port outputs an H-polarized output signal, and the coupling port outputs a V-polarized output signal.

In this implementation, for example, the fixed coupler 3 is a 90° electrical bridge and a coupling coefficient is 50%. A power pooling function may be implemented by adjusting a phase difference between two signals. However, if an input phase difference changes from 0° to 180°, an output phase difference jumps by 180°, and the jump causes an angle between a combined polarization direction and a vertical direction to change from original $\alpha°$ to $-\alpha°$. Therefore, a phase shift range of the adjustable phase shifter needs to be limited. In addition, because the phase shifter usually uses a narrowband, a phase shift amount varies with a frequency. As a result, signals of different frequencies borrow different powers, and the combined polarization direction changes with the frequency.

To resolve the foregoing problem, an embodiment of this application provides a signal polarization apparatus. The apparatus is described as follows.

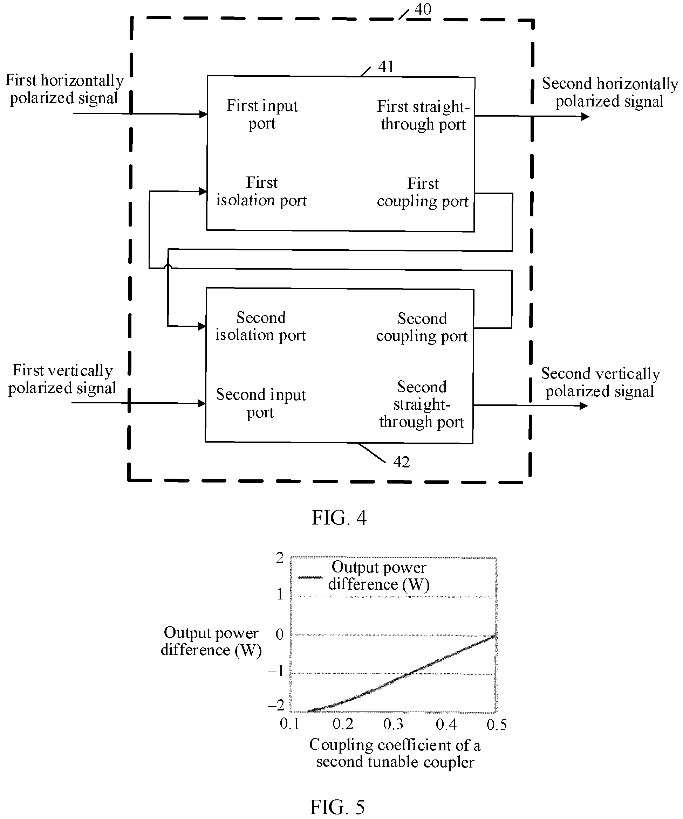

FIG. 4 is a diagram of a structure of a signal power pooling apparatus 40 according to an embodiment of this application. The apparatus 40 includes a first tunable coupler 41 and a second tunable coupler 42. The first tunable coupler 41 includes a first input port, a first straight-through port, a first coupling port, and a first isolation port. The second tunable coupler 42 includes a second input port, a second straight-through port, a second coupling port, and a second isolation port. The first input port may be configured to receive a first horizontally polarized signal (H-polarized input signal), and the first straight-through port may output a second horizontally polarized signal (H-polarized output signal). The second isolation port is connected to the first coupling port, and the second coupling port is connected to the first isolation port. The second input port may receive a first vertically polarized signal (V-polarized input signal), and the second straight-through port may output a second vertically polarized signal (V-polarized output signal).

In this embodiment of this application, the first horizontally polarized signal is input to the first tunable coupler 41, and may be split to the first straight-through port and the first coupling port based on a coupling coefficient of the first tunable coupler 41. For example, if a power of the first horizontally polarized signal is 1 W, and the coupling coefficient of the first tunable coupler is 0.7, the first horizontally polarized signal has a split signal with 0.7 W at the first straight-through port, and a split signal with 0.3 W at the first coupling port. In addition, the split signal at the first coupling port is input to the second isolation port, and is split to the second straight-through port and the second coupling port. The second coupling port inputs the split signal at the second isolation port and a split signal at the second input port to the first isolation port, to affect powers of signals output by the first straight-through port and the first coupling port. A power of the second horizontally polarized signal and a power of the second vertically polarized signal are in a state in which the powers dynamically change and tend to be stable. In this embodiment of this application, the coupling coefficient of the first tunable coupler 41 and a coupling coefficient of the second tunable coupler 42 may be adjusted, to obtain a second horizontally polarized signal and a second vertically polarized signal with wanted powers. Because the first horizontally polarized signal and the first vertically polarized signal are respectively input to input ports of different tunable couplers, a power of the first horizontally polarized signal and a power of the first vertically polarized signal may be mutually borrowed. In addition, the second horizontally polarized signal and the second vertically polarized signal are respectively output by straight-through ports of the different tunable couplers, a phase difference does not change, and no phase shifter is needed for regulating. This avoids a dispersion problem.

In this embodiment of this application, to stabilize a signal generated by combining the second horizontally polarized signal and the second vertically polarized signal, the first horizontally polarized signal and the first vertically polarized signal need to carry same information, to improve an edge coverage effect of the signal. In-phase transmission of the first horizontally polarized signal and the first vertically polarized signal may alternatively be performed, so that the phase difference between the second horizontally polarized signal and the second vertically polarized signal is 0. This improves an information combination effect after signal polarization.

In this embodiment of this application, the first tunable coupler and the second tunable coupler may be tunable couplers of a 90° electrical bridge. The first straight-through port and the first coupling port output signals having a 90° phase difference, and the second straight-through port and the second coupling port output signals having a 90° phase difference.

The coupling coefficient of the first tunable coupler and the coupling coefficient of the second tunable coupler may be adjusted. In this embodiment of this application, a coupling coefficient of one of the tunable couplers may be fixed, and a coupling coefficient of the other tunable coupler may be adjusted, to adjust the power of the second horizontally polarized signal output by the first straight-through port and the power of the second vertically polarized signal output by the second straight-through port. If the coupling coefficient of the first tunable coupler is fixed, when the coupling coefficient of the second tunable coupler is adjusted, the power of the second vertically polarized signal may be regulated to the second horizontally polarized signal. If the coupling coefficient of the second tunable coupler is fixed, when the coupling coefficient of the first tunable coupler is adjusted, the power of the second horizontally polarized signal may be regulated to the second vertically polarized signal. Therefore, mutual power borrowing between two sides may be implemented. This improves flexibility of signal power adjustment.

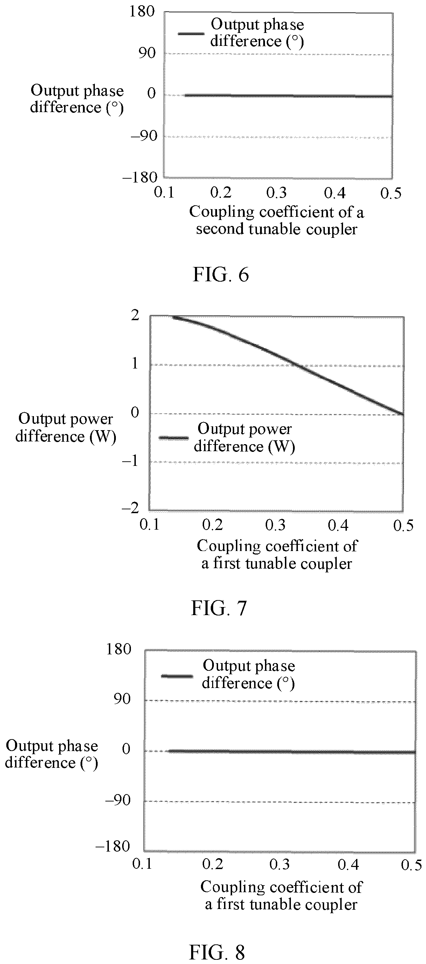

In an example, the coupling coefficient of the first tunable coupler may be fixed to 0.5. In this case, the coupling coefficient of the second tunable coupler may be adjusted. FIG. 5 is a diagram of a change of an output power difference. The coupling coefficient of the second tunable coupler is used as a horizontal coordinate, and the output power difference is used as a vertical coordinate. The output power difference may be controlled by adjusting the coupling coefficient of the second tunable coupler. When the coupling coefficient of the second tunable coupler gradually changes from 0.137 to 0.5, the output power difference gradually changes from -2 W to 0 W. In this case, an output phase difference is shown in FIG. 6. The coupling coefficient of the second tunable coupler is used as a horizontal coordinate, and the output phase difference is used as a vertical coordinate. As the coupling coefficient of the second tunable coupler gradually changes from 0.137 to 0.5, the output phase difference is always 0.

Correspondingly, when the coupling coefficient of the second tunable coupler is fixed to 0.5, the output power difference may be adjusted by adjusting the coupling coefficient of the first tunable coupler. Refer to another diagram of a change of an output power difference shown in FIG. 7. The coupling coefficient of the first tunable coupler is used as a horizontal coordinate, and the output power difference is used as a vertical coordinate. When the coupling coefficient of the first tunable coupler gradually changes from 0.137 to 0.5, the output power difference gradually changes from 2 W to 0 W. In this case, another diagram of a change of an output phase difference is shown in FIG. 8. The coupling coefficient of the first tunable coupler is used as a horizontal coordinate, and the output phase difference is used as a vertical coordinate. As the coupling coefficient of the first tunable coupler gradually changes from 0.137 to 0.5, the output phase difference is always 0.

In other words, in this embodiment of this application, the coupling coefficient of one of the tunable couplers may be fixed to 0.5, and the coupling coefficient of the other tunable coupler may be adjustable within 0.137 to 0.5, so that the output power difference changes between -2 W and 2 W. This improves flexibility of controlling a signal polarization direction.

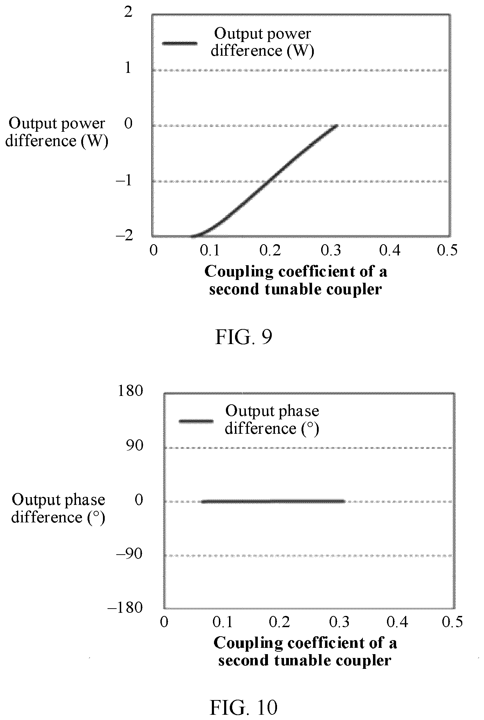

In another example, the coupling coefficient of the first tunable coupler may be fixed to 0.309. In this case, the coupling coefficient of the second tunable coupler may be adjusted. FIG. 9 is another diagram of a change of an output power difference. The coupling coefficient of the second tunable coupler is used as a horizontal coordinate, and the output power difference is used as a vertical coordinate. The output power difference may be controlled by adjusting the coupling coefficient of the second tunable coupler. When the coupling coefficient of the second tunable coupler gradually changes from 0.066 to 0.309, the output power difference gradually changes from -2 W to 0 W. In this case, an output phase difference is shown in FIG. 10. The coupling coefficient of the second tunable coupler is used as a horizontal coordinate, and the output phase difference is used as a vertical coordinate. As the coupling coefficient of the second tunable coupler gradually changes from 0.066 to 0.309, the output phase difference is always 0.

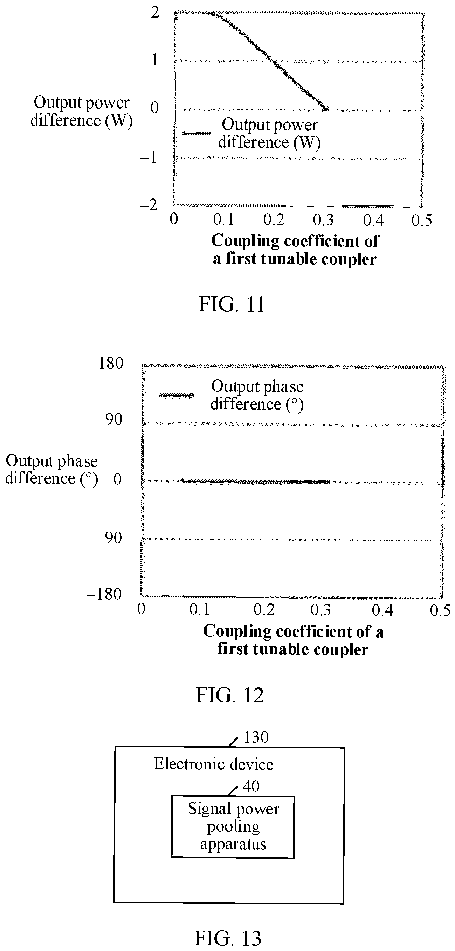

Correspondingly, when the coupling coefficient of the second tunable coupler is fixed to 0.309, the output power difference may be adjusted by adjusting the coupling coefficient of the first tunable coupler. Refer to another diagram of a change of an output power difference shown in FIG. 11. The coupling coefficient of the first tunable coupler is used as a horizontal coordinate, and the output power difference is used as a vertical coordinate. When the coupling coefficient of the first tunable coupler gradually changes from 0.066 to 0.309, the output power difference gradually changes from 2 W to 0 W. In this case, another diagram of a change of an output phase difference is shown in FIG. 12. The coupling coefficient of the first tunable coupler is used as a horizontal coordinate, and the output phase difference is used as a vertical coordinate. As the coupling coefficient of the first tunable coupler gradually changes from 0.066 to 0.309, the output phase difference is always 0.

In other words, in this embodiment of this application, the coupling coefficient of one of the tunable couplers may be fixed to 0.309, and the coupling coefficient of the other tunable coupler may be adjustable within 0.066 to 0.309, so that the output power difference changes between -2 W and 2 W. This improves flexibility of controlling a signal polarization direction.

The structure in FIG. 4 in this embodiment of this application is applicable to a scenario in which powers of two signals are mutually borrowed. In a scenario in which powers of a plurality of signals are mutually borrowed, after two signals are processed in the structure in FIG. 4, a signal generated through processing and another signal are continuously input to another signal power pooling apparatus until all signals in the plurality of signals are processed.

FIG. 13 is a diagram of a possible structure of an electronic device 130 according to an embodiment of this application. The electronic device may be a signal processor, and the signal processor may include the signal power pooling apparatus shown in FIG. 4.

Finally, it should be noted that the foregoing embodiments are merely intended for describing the technical solutions of this application, but not for limiting this application. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. A signal power pooling apparatus, comprising a first tunable coupler and a second tunable coupler, wherein

    the first tunable coupler comprises a first input port, a first straight-through port, a first coupling port, and a first isolation port, the first input port is configured to receive a first horizontally polarized signal, and the first straight-through port is configured to output a second horizontally polarized signal; and
    the second tunable coupler comprises a second input port, a second straight-through port, a second coupling port, and a second isolation port, the second isolation port is connected to the first coupling port, the second coupling port is connected to the first isolation port, the second input port is configured to receive a first vertically polarized signal, and the second straight-through port is configured to output a second vertically polarized signal.

2. The apparatus according to claim 1, wherein a coupling coefficient of one of the first tunable coupler and the second tunable coupler is fixed.

3. The apparatus according to claim 2, wherein when a coupling coefficient of the first tunable coupler is fixed to 0.5, a coupling coefficient of the second tunable coupler is adjustable within 0.137 to 0.5.

4. The apparatus according to claim 2 or 3, wherein when the coupling coefficient of the second tunable coupler is fixed to 0.5, the coupling coefficient of the first tunable coupler is adjustable within 0.137 to 0.5.

5. The apparatus according to claim 2, wherein when a coupling coefficient of the first tunable coupler is fixed to 0.309, a coupling coefficient of the second tunable coupler is adjustable within 0.066 to 0.309.

6. The apparatus according to claim 2 or 5, wherein when the coupling coefficient of the second tunable coupler is fixed to 0.309, the coupling coefficient of the first tunable coupler is adjustable within 0.066 to 0.309.

7. The apparatus according to any one of claims 1 to 6, wherein the first tunable coupler and the second tunable coupler are tunable couplers of a 90° electrical bridge.

8. The apparatus according to any one of claims 1 to 7, wherein the first horizontally polarized signal and the first vertically polarized signal carry same information.

9. The apparatus according to claim 8, wherein the first horizontally polarized signal and the first vertically polarized signal are in-phase.

10. An electronic device, wherein the electronic device comprises the signal power pooling apparatus according to any one of claims 1 to 9.

H-polarized
input signal

V-polarized
input signal

Power pool black box

*1*

H-polarized
output signal

V-polarized
output signal

FIG. 1

H-polarized
input signal

V-polarized
input signal

Input port

Isolation
port

Straight-
through port

Coupling
port

*2*

H-polarized
output signal

V-polarized
output signal

FIG. 2

H-polarized
input signal

Adjustable
phase shifter

*31*

V-polarized
input signal

Adjustable
phase shifter

*32*

Input port

Isolation
port

Straight-
through port

Coupling
port

*3*

H-polarized
output signal

V-polarized
output signal

FIG. 3

FIG. 4

FIG. 5

Output phase difference (°)

180
90
0
−90
−180

0.1   0.2   0.3   0.4   0.5

Coupling coefficient of a
second tunable coupler

Output phase
difference (°)

FIG. 6

Output power difference (W)

2
1
0
−1
−2

0.1   0.2   0.3   0.4   0.5

Coupling coefficient of
a first tunable coupler

Output power
difference (W)

FIG. 7

Output phase difference (°)

180
90
0
−90
−180

0.1   0.2   0.3   0.4   0.5

Coupling coefficient of
a first tunable coupler

Output phase
difference (°)

FIG. 8

FIG. 9

FIG. 10

FIG. 11

FIG. 12

FIG. 13

**INTERNATIONAL SEARCH REPORT**

International application No.

**PCT/CN2022/078175**

| A. | CLASSIFICATION OF SUBJECT MATTER |
|---|---|

H04B 7/10(2006.01)i; H04B 1/40(2015.01)i

According to International Patent Classification (IPC) or to both national classification and IPC

| B. | FIELDS SEARCHED |
|---|---|

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNTXT; CJFD; CNKI; WPABS; ENTXT; IEEE: 功率, 池化, 可调, 调整, 调节, 耦合器, 系数, 耦合端, 隔离端, 第二, 另一, 水平极化, 垂直极化, power, pool+, adjust+, coupler, coefficient, parameter, coupling end, isolation end, second, another, other, horizontal polarized, vertical polarized

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 105974383 A (ZHUHAI NARUIDA TECHNOLOGY CO., LTD.) 28 September 2016 (2016-09-28) description, paragraphs 10-17 | 1-10 |
| A | CN 112448176 A (NORTHWESTERN POLYTECHNIC UNIVERSITY) 05 March 2021 (2021-03-05) entire document | 1-10 |
| A | JP 2017011570 A (JAPAN RADIO CO., LTD.) 12 January 2017 (2017-01-12) entire document | 1-10 |
| A | US 10298336 B1 (GOOGLE INC. et al.) 21 May 2019 (2019-05-21) entire document | 1-10 |
| A | US 2021392005 A1 (AT & T INTELLECTUAL PROPERTY I, L.P.) 16 December 2021 (2021-12-16) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 August 2022** | **30 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/078175**

| Patent document cited in search report | | | Publication date (day/month/year) | Patent family member(s) | | | Publication date (day/month/year) |
|---|---|---|---|---|---|---|---|
| CN | 105974383 | A | 28 September 2016 | None | | | |
| CN | 112448176 | A | 05 March 2021 | None | | | |
| JP | 2017011570 | A | 12 January 2017 | None | | | |
| US | 10298336 | B1 | 21 May 2019 | None | | | |
| US | 2021392005 | A1 | 16 December 2021 | US | 11201753 | B1 | 14 December 2021 |

Form PCT/ISA/210 (patent family annex) (January 2015)